# EUROPÄISCHE PATENTSCHRIFT

(11) **EP 3 507 890 B1**
(45) Veröffentlichungstag und Bekanntmachung des Hinweises auf die Patenterteilung: **14.09.2022**
(21) Anmeldenummer: 17783801.8
(22) Anmeldetag: 05.10.2017
(51) Int. Cl.: H02K 5/15, H02K 5/173

(54) **MOTORANORDNUNG**
MOTOR ASSEMBLY
ENSEMBLE MOTEUR

(30) Priorität: 28.10.2016 DE 102016221274
(43) Veröffentlichungstag der Anmeldung: 10.07.2019
(73) Patentinhaber: Siemens Energy Global GmbH & Co. KG, 81739 München (DE)
(72) Erfinder: HILKER, Thomas, 14532 Stahnsdorf (DE)
(86) Internationale Anmeldenummer: PCT/EP2017/075279
(87) Internationale Veröffentlichungsnummer: WO 2018/077585

(56) Entgegenhaltungen:
- EP-A1- 0 412 954
- DE-A1- 2 148 827
- DE-T2- 60 009 501
- US-A- 5 818 142

## Beschreibung

Die Erfindung bezieht sich auf eine Motoranordnung aufweisend einen Stator und einen Rotor mit einer Welle, welche in zumindest einem Lagerschild beweglich gelagert ist, wobei der Lagerschild bügelförmig verläuft und Bügelenden des Lagerschildes sich von einem zentralen Lagerbereich abspreizen und im zentralen Lagerbereich zumindest ein Anschlagpunkt zum Anschlagen der Motoranordnung angeordnet ist, wobei der Anschlagpunkt in einem wandungsverstärkten Abschnitt des zentralen Lagerbereiches liegt.

Eine Motoranordnung ist beispielsweise aus der Europäischen Patentanmeldung EP 1 071 189 A2 bekannt. Die dortige Motoranordnung ist für den Einsatz bei hohen Temperaturen vorgesehen und weist einen Stator sowie einen Rotor auf. Der Rotor ist mit einer Welle ausgestattet, welche in einem Lagerschild beweglich gelagert ist. Der Lagerschild ist aus einem Kunststoff gefertigt und mit einem Wärmeableitblech ausgestattet. Der Lagerschild ist dabei im Wesentlichen topfförmig ausgebildet, wobei mantelseitige Abschnitte des Lagerschildes stopfenartig in den Stator eingesetzt und dort mittels eines umgebördelten Bundes festgelegt sind. Eine derartige Konstruktion ist zwar auf Grund der Unterteilung in Lagerschild und Wärmeableitblech kostengünstig zu fertigen, jedoch ist die mechanische Stabilität trotz Nutzung des Wärmeableitbleches zur mechanischen Versteifung des Lagerschildes als begrenzt einzuschätzen.

In der Übersetzung der europäischen Patentschrift DE 600 09 501 T2, der europäischen Patentanmeldung EP 0 412 954 A1, dem US-Patent US 5,818,142 sowie der Offenlegungsschrift DE 2148827 sind Motoranordnungen beschrieben, welche einen Rotor und einen Stator mit einer Welle aufweisen, wobei die Welle in einem Lagerschild beweglich gelagert ist.

Insofern ergibt sich als Aufgabe der Erfindung eine vereinfachte Konstruktion für eine Motoranordnung mit Lagerschild anzugeben, welche bei einer guten Kühlleistung eine hohe mechanische Steifigkeit aufweist.

Erfindungsgemäß wird die Aufgabe bei einer Motoranordnung der eingangs genannten Art dadurch gelöst, dass der wandungsverstärkte Abschnitt einen Steg zu einem Bügelende ausbildet und der Steg ein Bügelende mit einer Lageröffnung für die Welle verbindet, wobei ausgehend von der Lageröffnung mehrere Stege in Richtung des Bügelendes verlaufen, wobei ein mittiger Steg beiderseits von jeweils einem Steg flankiert ist, die einander annähernd auf das Bügelende zulaufen und der mittige Steg sich bis in das Bügelende erstreckt und in dem mittigen Steg ein Verspannpunkt für den Stator angeordnet ist, wobei die flankierenden Stege an das Bügelende anstoßend enden.

Ein bügelförmiger Lagerschild weist den Vorteil auf, dass ein im Wesentlichen streifenförmig verlaufender Lagerschild gegeben ist, welcher vorteilhaft mit dem Stator verbunden ist, so dass Kräfte zwischen Lagerschild und Stator in einfacher Weise übertragen werden können. Der Lagerschild kann dabei winkelstarr mit dem Stator verbunden sein. Durch die Bügelform können an den Bügelenden Anlageflächen geschaffen werden, um eine Kontaktierung mit dem Stator zu gewährleisten. Die Bügelenden spreizen sich dabei von einem zentralen Lagerbereich des Lagerschildes ab, so dass der Lagerschild vorteilhaft den Stators stirnseitig überspannen kann. Somit ist eine Positionierung der Welle in dem Lagerschild ermöglicht, wobei der Stator stirnseitig nur teilweise von dem Lagerschild überdeckt ist. Insbesondere kann der Lagerschild bei einem im Wesentlichen kreisförmigen Querschnitt des Stators diesen zentrisch queren, so dass beiderseits des Lagerschildes, also quer zur Erstreckung der Bügelachse ein vereinfachter Zugang zu dem Stator und damit auch ein vereinfachter Zugang von Kühlmedien zu dem Stator ermöglicht ist. Der Lagerschild kann dazu im Wesentlichen streifenförmig oder bandförmig ausgeformt sein. Der zentrale Lagerbereich dient einem Lagern einer Welle des Rotors. Weiter kann der zentrale Lagerbereich genutzt werden, um die Motoranordnung einzuspannen. Die Bügelenden begrenzen/schließen sich an den zentralen Lagerbereich an. Die Bügelenden spreizen sich dazu von dem zentralen Lagerbereich ab, um eine Beabstandung desselben zum Stator zu gewährleisten. Vorteilhaft spreizen sich die Bügelenden zur selben Seite bezogen auf den zentralen Lagerbereich. Der Lagerschild nebst Bügelenden kann sich dabei nach Art einer Brücke über den Stator spannen. Vorteilhaft kann der Lagerschild einstückig gefertigt sein. Beispielsweise kann der Lagerschild durch ein Gussverfahren hergestellt werden. Vorteilhaft kann der Lagerschild ein metallischer Gusskörper sein, wodurch eine gute Wärmeleitfähigkeit durch den Lagerschild hindurch gegeben ist. Dabei ist auf Grund der bügelförmigen Struktur des Lagerschildes ein Abstützen bzw. Einleiten von Kräften, insbesondere von dem drehbeweglich gelagerten Rotor, in den Stator ermöglicht.

Eine weitere vorteilhafte Ausgestaltung kann vorsehen, dass der zentrale Lagerbereich zwischen den Bügelenden eine in Querrichtung verlaufende Auskragung aufweist.

Der Lagerschild verläuft in Richtung der Bügelachse im Wesentlichen streifenförmig. Dabei kann/können die Wandstärke und/oder die Streifenbreite des Lagerschildes variieren, wodurch eine Versteifung des Lagerschildes erzielt werden kann. Durch eine Auskragung kann die Grundfläche des zentralen Lagerbereiches vergrößert werden.

Die Breite der Bügelenden, insbesondere der Abschnitte der Bügelenden, welche an den zentralen Lagerbereich anstoßen, weist in Querrichtung zur Bügelachse eine geringere (maximale) Erstreckung auf als der zentrale Lagerbereich. Dies kann erzielt werden, indem zwischen den Bereichen, in welchen die Bügelenden an den zentralen Lagerbereich stoßen, der zentrale Lagerbereich eine Auskragung erfährt, so dass ein querschnittsvergrößerter Lagerbereich, beispielsweise in Form einer ebenen Anlagefläche, gebildet ist. Im querschnittsvergrößerten zentralen Lagerbereich kann beispielsweise unter Nutzung eines Lagers die Welle beweglich gelagert sein. Bevorzugt kann die Auskragung derart gestaltet sein, dass eine Aufnahmeöffnung zur Aufnahme eines Lagers für die Welle eine entsprechende Verstärkung erfährt, so dass eine mechanisch stabile Lagerung des Lagers in dem zentralen Lagerbereich möglich ist. Die Auskragung kann dabei bezüglich der Bügelachse beiderseits symmetrisch verlaufen. Eine Abgrenzung des zentralen Lagerbereiches gegenüber den Bügelenden kann beispielsweise über den Punkt/Bereich erfolgen, an welchem die Bügelenden aus der Ebene des zentralen Lagerbereiches auslenken.

Vorteilhafterweise kann weiter vorgesehen sein, dass der zentrale Lagerbereich zwischen den Bügelenden im Wesentlichen konvex auskragt.

Ein konvexes Auskragen (gegenüber den sich anschließenden Bügelenden) des Lagerbereiches ermöglicht es, die Körperkanten des zentralen Lagerbereiches um eine Lageröffnung herum zu verstärken. Beispielsweise kann der zentrale Lagerbereich dazu linsenförmig erweitert ausgeformt sein. In einer vereinfachten Ausführung kann vorgesehen sein, dass der Lagerbereich zum Auskragen beispielsweise zwei stumpfwinklig aufeinander zulaufende (gerade) Körperkanten aufweist, um den Lagerbereich zu begrenzen. Die Körperkanten können beispielsweise stumpfwinklig aneinanderstoßen, um eine im Wesentlichen konvexe Auskragung auszubilden. Ausgehend von den Bügelenden kann eine über die gesamte Erstreckung des zentralen Lagerbereiches zwischen den Bügelenden ein konvexer Verlauf der Körperkanten erfolgen.

Eine weitere vorteilhafte Ausgestaltung kann vorsehen, dass der zentrale Lagerbereich eine im Wesentlichen sechseckige Grundfläche aufweist.

Der zentrale Lagerbereich kann eine im Wesentlichen sechseckige Grundfläche aufweisen, wobei die Bügelenden des Lagerschildes sich von gegenüber liegenden Seiten der im Wesentlichen sechseckigen Grundfläche abspreizen. Dabei kann vorgesehen sein, dass die sechseckige Grundfläche einem gleichseitigen Sechseck entspricht. Weiter kann vorgesehen sein, dass es sich um ein regelmäßiges gleichseitiges Sechseck handelt. Es kann jedoch auch vorgesehen sein, dass es sich um ein unregelmäßiges Sechseck handelt, wobei die Seiten des Sechseckes, welche der Anlage der Bügelenden dienen, vorteilhaft parallel zueinander ausgerichtet sein sollten, wobei deren Seitenlänge annähernd gleich groß sein sollte, wohingegen die verbleibenden Seiten des Sechseckes eine größere, eine kleinere Erstreckung oder eine gleich große Erstreckung wie die Seiten des Sechseckes, welche einer Anlage der Bügelenden dienen, aufweisen können. Dabei können die Innenwinkel des Sechseckes variieren. Insbesondere können die Innenwinkel der aneinander stoßenden Seiten, die eine konvexe Auskragung an dem Lagerschild bilden, einen größeren Innenwinkel einschließen als die verbleibenden Innenwinkel, welche an die Seiten stoßen, an welchen die Bügelenden angeordnet sind.

Es ist weiter vorteilhaft vorgesehen, dass im zentralen Lagerbereich zumindest ein Anschlagpunkt zum Anschlagen der Motoranordnung angeordnet ist, welcher in einem wandungsverstärkten Abschnitt des zentralen Lagerbereiches liegt, wobei der wandungsverstärkte Abschnitt einen Steg zu einem Bügelende ausbildet.

Ein Anschlagpunkt zum Anschlagen der Motoranordnung dient dazu, den Motor winkelstarr beispielsweise mit einem Traggestellt zu verbinden. Im Vorzugsfall können ausschließlich ein oder mehrere Lagerpunkte in dem Lagerschild im zentralen Lagerbereich genutzt werden, um die Motoranordnung abzufangen. Bevorzugt können die Anschlagpunkte dabei symmetrisch um eine Lageröffnung bzw. um die Drehachse der Welle des Rotors herum verteilt angeordnet sein. Ein Anschlagpunkt kann beispielsweise eine Ausnehmung aufweisen, um beispielsweise einen Bolzen oder ähnliches zum Festlegen aufnehmen zu können. Beispielsweise kann ein Lagerpunkt derart positioniert sein, dass dieser bei einer konvexen Grundfläche des zentralen Lagerbereiches des Lagerschildes im Bereich der konvexen Auskragung positioniert ist. Beispielsweise kann ein Lagerpunkt in einer Winkelhalbierenden einer Ecke eines beispielsweise sechseckigen zentralen Lagerbereiches angeordnet sein. Es kann jedoch auch vorgesehen sein, dass ein Lagerpunkt mittig in einer Seite des zentralen Lagerbereiches z. B. eines sechseckigen zentralen Lagerbereiches positioniert ist. Durch eine Verwendung eines wandungsverstärkenden Abschnittes können Kräfte über den Anschlagpunkt verbessert in den Lagerschild eingeleitet werden und Kräfte von der Motoranordnung in ein Traggestell geleitet werden. Durch eine punktuelle Verstärkung der Wandung des Lagerschildes kann eine Versteifung des Lagerschildes vorgenommen werden. Die Nutzung von wandungsverstärkten Abschnitten in Form von Stegen ermöglicht es, Kraftflusslinien folgend Kräfte aus/in ein Bügelende zu leiten bzw. aus dem Stator über ein Bügelende in einen Anschlagpunkt des zentralen Lagerbereiches zu leiten. Somit ist es möglich, beispielsweise eine strahlenförmige Kraftverteilung in dem Lagerschild zu ermöglichen. Dabei verläuft der Steg vorteilhaft im Wesentlichen in Richtung der Bügelachse, so dass ein Einkerben oder Verformen des Lagerschildes auf Grund von Kräften, die an dem Lagerschild angreifen, erschwert ist.

Weiter ist vorgesehen, dass der Steg ein Bügelende mit einer Lageröffnung für die Welle verbindet.

Eine Lageröffnung dient einer Aufnahme der Welle, um diese beweglich zu positionieren. Die Welle nebst Rotor kann dabei drehbeweglich gelagert sein, wobei zur drehbeweglichen Lagerung beispielsweise ein Wälzlager in eine Lageröffnung des Lagerschildes eingesetzt ist. Nutzt man nunmehr einen Steg, um die Lageröffnung mit einem Bügelende zu verbinden, so besteht die Möglichkeit, Kräfte des rotierenden Rotors in das Lagerschild einzuleiten und diesen Steg zu nutzen, um beispielsweise einen Anschlagpunkt für die Motoranordnung anzuordnen. Somit können Kräfte unmittelbar aus dem Rotor über den Steg in einen Anschlagpunkt sowie umgekehrt geleitet werden. Ein oder mehrere Stege kann/können die Lageröffnung vollständig umschließen, um eine verbesserte Aufnahme eines Lagers (z. B. eines Wälzlagers) zu ermöglichen. Mit dem Lagerschild ist einerseits der Stator nebst Rotor verbunden. Andererseits ist der Lagerschild mit einem Traggestell, beispielsweise einem Chassis, einem Gehäuse, einem Kasten oder ähnlichem, verbunden.

Eine weitere vorteilhafte Ausgestaltung kann vorsehen, dass der Lagerschild gegen den Stator verspannt, insbesondere unter Zwischenlage des Stators mit einem gegenseitigen Lagerschild verspannt ist.

Der Lagerschild kann gegen den Stator verspannt sein. Bevorzugt kann der Lagerschild gegen den Stator kraftschlüssig verspannt sein. Dadurch wird ein winkelsteifer Verbund zwischen Lagerschild und Stator geschaffen, wodurch eine vereinfachte Montage der Motoranordnung gegeben ist. Beispielsweise kann durch ein Verspannen des Lagerschildes ein Lager der Welle des Rotors in der Aufnahmeöffnung gesichert werden, indem die Lageröffnung einen Anschlag für das Lager ausbildet. Mit anderen Worten, eine Schulter an/in der Lageröffnung kann parallel zu einer Anlagefläche des Lagerschildes für den Stator ausgerichtet sein. Somit ist es möglich, mit einem Verspannen von Stator und Lagerschild gleichzeitig ein Verspannen der Welle des Rotors bzw. eines Lagers in der Lageröffnung vorzunehmen und einem Herauslösen des Lagers aus dem Lagerschild entgegenzuwirken. Vorteilhaft kann vorgesehen sein, dass der Lagerschild gegen ein gegenseitiges Lagerschild verspannt wird, wobei zwischen Lagerschild und gegenseitigem Lagerschild der Stator eingespannt ist. Beispielsweise können sogenannte Spannschrauben oder Spannschlösser sich von Lagerschild zu Lagerschild erstrecken und dabei teilweise durch den Stator beispielsweise in entsprechenden Durchgangsbohrungen, Nuten oder dergleichen verlaufen. Dadurch kann die Anzahl der zum Verbinden der Lagerschilde mit dem Stator notwendigen Verbindungselemente reduziert werden. Analog zur Lageröffnung im Lagerschild kann auch im gegenseitigen Lagerschild eine weitere Lageröffnung vorgesehen sein, um die Welle/den Rotor auch dort beweglich zu lagern. Entsprechend kann die dortige weitere Lageröffnung auch mit einer Schulter versehen sein, so dass Lager, welche in den Lageröffnungen der Lagerschilde befindlich sind, in ihren Positionen über das Verspannen der Lagerschilde gegen den Stator gesichert sind.

Vorteilhafterweise kann vorgesehen sein, dass ein Lager der Welle in der Lageröffnung durch Verspannen des Lagerschildes gegen den Stator axial gesichert ist.

Ein Lager der Welle kann beispielsweise ein Wälzlager sein, welches einerseits in der Lageröffnung gelagert ist und andererseits mit der Welle verbunden ist. Zwischen den Teilelementen des Lagers kann eine Drehbewegung ausgeführt werden, so dass eine reibungsarme Rotation des Rotors ermöglicht ist. Das Lager kann beispielsweise ein Wälzlager, z. B. ein Kugellager sein, welches in eine Lageröffnung eingelegt wird. Durch ein Verspannen des Lagerschildes gegen den Stator kann das Lager in der Lageröffnung fixiert werden, indem ein formschlüssiger Sitz des Wellenlagers erfolgt. Beispielsweise ist durch eine vorspringende Schulter ein Herauslösen bzw. Herausbewegen des Wellenlagers aus der Lageröffnung verhindert. Auf Grund der Spannkräfte zwischen Lagerschild und Stator kann das Lager gegen die vorspringende Schulter gepresst sein, wodurch eine Entfernung des Lagers verhindert ist.

Vorteilhafterweise kann vorgesehen sein, dass ein wandungsverstärkender Steg eine Körperkante des zentralen Lagerbereiches bildet.

Ein wandungsverstärkender Steg bildet an dem Lagerschild einen streifenartigen Abschnitt aus, wodurch das Lagerschild eine verstärkte Wandung aufweist. Die Wandung ist dabei bezüglich eines sich anschließenden Bereiches des Lagerschildes verstärkt. Vorteilhaft kann ein Steg dabei derart ausgestaltet sein, dass dieser eine entsprechende Körperkante des Lagerschildes bildet. Beispielsweise kann der Steg die Kontur des zentralen Lagerschildes begrenzen, so dass beispielsweise ein sechseckiges Lagerschild gebildet ist, dessen Seiten welche die Bügelenden miteinander verbinden durch einen entsprechenden Steg ausgebildet und mechanisch versteift sind.

Weiter ist vorgesehen, dass ausgehend von einer Lageröffnung mehrere Stege in Richtung zumindest eines der Bügelenden verlaufen, wobei ein mittiger Steg beiderseits von jeweils einem Steg flankiert ist, die einander annähernd auf die Bügelenden zulaufen.

An der Lageröffnung ist auf Grund der Bewegung des Rotors ein Auftreten von Kräften zu erwarten. Lässt man nunmehr einen Steg von einer Lageröffnung zu einem Bügelende verlaufen, so können Lagerkräfte vereinfacht in den Bereich eines Bügelendes geleitet werden, so dass ein strahlenförmiges Ableiten von Kräften in das Bügelende ermöglicht ist. Sind in diesem Steg nunmehr auch Anschlagpunkte zum Anschlagen der Motoranordnungen angeordnet, so kann diese Struktur genutzt werden, um die Motoranordnung zu positionieren und Kräfte beispielsweise ausgelöst durch eine Rotation des Rotors in vereinfachter Weise in ein Traggestell der Motoranordnung zu leiten. Vorteilhaft verlaufen die Stege im Wesentlichen in Richtung der Bügelachse. Dabei können Kräfte in Richtung der sich abspreizenden Bügelenden geleite werden. Durch ein Annähern der flankierenden Stege können Kräfte aus dem auskragenden zentralen Lagerbereich gebündelt und in querschnittsreduzierte Bügelenden abgeleitet werden. Dabei können die Stege insbesondere im Übergangsbereich zwischen zentralem Lagerbereich und Bügelende stabilisierend wirken, so dass ein Auslenken/Abknicken der abgespreizten Bügelenden verhindert ist. Insbesondere können die Stege in der Innenkrümmung des bügelförmigen Lagerschildes angeordnet sein.

Weiter ist vorgesehen, dass der mittige Steg sich bis in ein Bügelende erstreckt, wobei die flankierenden Stege an das Bügelende anstoßend enden.

Durch einen Verlauf des mittigen Steges bis in ein Bügelende hinein ist die Möglichkeit gegeben, den mittigen Steg zu nutzen, um beispielsweise Kräfte zu einem Anschlagpunkt im zentralen Lagerbereich aus dem Bügelende zu leiten. Des Weiteren ist durch ein Erstrecken des mittigen Steges bis in ein Bügelende hinein die Möglichkeit geben, um einen Verspannpunkt für den Stator in einem Bügelende anzuordnen und Kräfte direkt zwischen einem Anschlagpunkt und einem Verspannpunkt über einen Steg zu übertragen.

Durch ein Anstoßen eines Steges an ein Bügelend ist weiterhin ein Stabilisieren des Übergangs zwischen zentralem Lagerbereich und Bügelende, insbesondere in einer Innenkrümmung des Lagerschildes gegeben.

Weiter ist vorgesehen, dass in dem mittigen Steg ein Verspannpunkt für den Stator angeordnet ist.

Ein Verspannpunkt für den Stator in mittigem Steg ermöglicht es, die abgespreizten Bügelenden mit dem Stator zu verspannen und damit den Lagerschild mit dem Stator winkelstarr zu verbinden. Eine Krafteinleitung zum Verspannen von Stator und Lagerschild ist geeignet in einem Bügelende anzuordnen, wodurch eine Anlage der Bügelenden am Stator ermöglicht ist. Zur Anlage am Stator und zur Krafteinleitung kann beispielsweise eine Anlagefläche am Bügelende vorgesehen sein.

Eine weitere vorteilhafte Ausgestaltung kann vorsehen, dass zumindest ein Bügelende eine oberflächenvergrößernde Verrippung trägt.

Eine oberflächenvergrößernde Verrippung ermöglicht eine zusätzliche Versteifung eines Bügelendes. Zusätzlich ist die Möglichkeit gegeben, über eine oberflächenvergrößernde Verrippung Wärme abzuleiten. Die Verrippung kann beispielsweise streifenförmig auf einem Bügelende aufgebracht sein, wobei die Verrippung bevorzugt im Bereich einer Außenkrümmung des Lagerschildes an einem Bügelende zu positionieren ist. Die Verrippung sollte dabei streifenförmig ausgebildet sein, wobei die Streifen im Wesentlichen in Richtung der Bügelachse ausgerichtet sind. Vorteilhaft sollte eine Verrippung am Bügelende versetzt zu einem Steg angeordnet sein, welcher auch im Bügelende verläuft.

Eine weitere vorteilhafte Ausgestaltung kann vorsehen, dass zumindest eines der Bügelenden eine Anlagefläche für den Stator aufweist, an/in welcher eine zentrierende Schulter für den Stator angeordnet ist.

Ein Bügelende kann mit einer Anlagefläche versehen sein, um eine mechanische Kontaktierung, gegebenenfalls auch eine elektrische Kontaktierung von Lagerschild und Stator zu ermöglichen. Durch eine zentrierende Schulter an/in den Anlageflächen ist die Möglichkeit gegeben, den Lagerschild relativ zum Stator auszurichten und zu zentrieren, so dass insbesondere die Lageröffnung und eine dort zu positionierende Welle fluchtend ausgerichtet werden können. Durch die zentrierende Schulter ist die Möglichkeit gegeben, dass sich der Lagerschild an einer Körperkante des Stators abstützt und eine Anlagefläche in einer bevorzugten Lage ausrichtet.

Eine weitere Aufgabe ist es, eine Antriebseinrichtung, insbesondere für ein Schaltgerät, anzugeben, welche eine Motoranordnung nach einer der vorstehenden Ausführungen aufweist, der einem Spannen einer Speicherfeder dient.

Ein Schaltgerät kann beispielsweise relativ zueinander bewegbare Schaltkontaktstücke aufweisen, wobei zur Bewegung der Schaltkontaktstücke Energie notwendig ist. Zum Bewegen der Schaltkontaktstücke notwendige Energie kann beispielsweise in einer Speicherfeder zwischengespeichert und bedarfsweise durch ein Entspannen der Speicherfeder bereitgestellt werden, um eine Relativbewegung der Schaltkontaktstücke des Schaltgerätes zu bewirken. Mittels der Motoranordnung, die Teil der Antriebseinrichtung ist, kann ein Spannen der Speicherfeder vorgenommen werden. Durch eine derartige Konstruktion ist es vorteilhaft möglich, mit einer geringen Leistung über größere Zeiträume ein Spannen der Speicherfeder vorzunehmen, wohingegen ein Entspannen der Speicherfeder beispielsweise während kurzer Zeiträume z. B. schlagartig erfolgt, wodurch sich in einfacher Form ein rasches Ändern des Schaltzustandes der Schaltkontaktstücke realisieren lässt.

Im Folgenden wird ein Ausführungsbeispiel der Erfindung schematisch in einer Zeichnung gezeigt und nachfolgend näher beschrieben. Dabei zeigt die
- Figur 1: eine Seitenansicht einer Motoranordnung; die
- Figur 2: eine perspektivische Ansicht eines Lagerschildes; die
- Figur 3: eine Ansicht in Richtung von Anlageflächen an Bügelenden des Lagerschildes und die
- Figur 4: eine weitere perspektivische Ansicht des Lagerschildes.

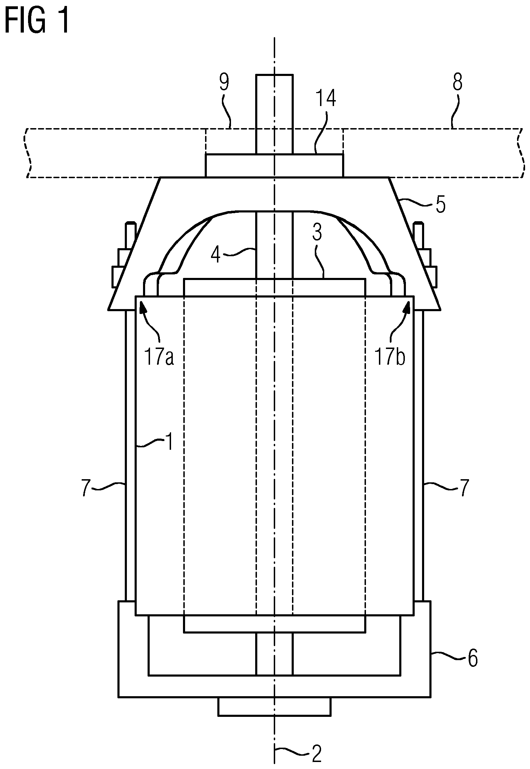

Die Figur 1 zeigt eine Motoranordnung, welche einen Stator 1 aufweist. Der Stator 1 ist im Wesentlichen hohlzylindrisch aufgebaut und weist eine Längsachse 2 (Hohlzylinderlängsachse) auf. Der Stator 1 weist eine durchgehende Ausnehmung auf, welche von einem Rotor 3 durchsetzt ist. Der Rotor 3 ist an einer Welle 4 gelagert. Die Welle 4 ist in stirnseitig am Stator 1 positionierten Lagerschilden gelagert. Am antriebsseitigen Ende des Stators 1 ist ein Lagerschild 5 angeordnet. Der Lagerschild 5 ist als Bügel ausgeführt, welcher eine Stirnseite des Stators 1 überspannt. Die Bügelachse 10 erstreckt sich quer (radial) zur Längsachse 2. Am entgegengesetzten Ende des Stators 1 ist ein gegenseitiges Lagerschild 6 angeordnet. Der gegenseitige Lagerschild 6 ist in seiner Ausführung abweichend zum Lagerschild 5 ausgeformt. Jedoch weist auch der gegenseitige Lagerschild 6 eine bügelförmige Struktur auf, wobei auch die Bügelachse des gegenseitigen Lagerschildes 6 im Wesentlichen radial zur Längsachse 2 ausgerichtet ist. Die Lagerschilde 5, 6 sind unter Zwischenlage des Stators 1 gegeneinander verspannt. Dazu stützen sich die Lagerschilde 5, 6 mit Anlagenflächen jeweils an stirnseitigen Flächen des Stators 1 ab. Um eine Spannkraft zwischen den Lagerschilden 5, 6 unter Zwischenlage des Stators 1 zu erzeugen, sind Spannanker 7 in den gegenseitigen Lagerschild 6 eingelegt. Die Spannanker 7 liegen dabei teilweise in mantelseitig in Richtung der Längsachse 2 verlaufenden Ausnehmungen des Stators 1. Die Spannanker 7 durchsetzen am Lagerschild 5 Ausnehmungen, welche als Verspannpunkte 16a, 16b dienen. Mittels auf den Spannankern 7 aufgebrachten Gewindegängen und entsprechend aufgesetzter Muttern ist ein Spannen der Spannanker 7 und damit ein Verpressen der Lagerschilde 5, 6 unter Zwischenlage des Stators 1 möglich.

Am antriebsseitigen Ende ragt die Welle 4 durch den Lagerschild 5 hindurch. Die Welle 4 ist im Lagerschild 5 mittels eines Wälzlagers drehbeweglich gelagert. Im gegenseitigen Lagerschild 6 ist die Welle 4 ebenfalls mittels eines Wälzlagers drehbeweglich gelagert. Dabei sind die Wälzlager in Lageröffnungen der Lagerschilde 5, 6 eingesetzt, wobei die Lageröffnungen vorspringende Schultern aufweisen, welche ein Hindurchtauchen der Wälzlager verhindern. Somit ist es möglich, dass bei Verspannung der Lagerschilde 5, 6 unter Zwischenlage des Stators 1 in den Lageröffnungen der Lagerschilde 5, 6 befindliche Wälzlager verpresst werden, indem die vorspringenden Schultern an/in den Lageröffnungen einander angenähert werden. Die Schultern verhindern ein Hindurchtauchen bzw. ein Herausbewegen der Wälzlager aus den Lageröffnungen.

Um eine Bewegung von der Motoranordnung abgeben zu können, ist die Lageröffnung im Lagerschild 5 von der Welle 4 durchsetzt. Im gegenseitigen Lagerschild 6 ist ein Hindurchragen der Welle 4 nicht vorgesehen. Dort liegt ein stirnseitiger Verschluss der Lageröffnung vor.

Um die Motoranordnung zu positionieren, ist der Lagerschild 5 in der Figur 1 beispielhaft mit einem Traggestell 8 verbunden. Das Traggestell 8 weist eine komplementär zur Lageröffnung im Lagerschild 5 befindliche Ausnehmung 9 auf, wobei der Lagerschild 5 mit dem Traggestell 8 am Umfang der Ausnehmung 9 verbolzt ist, so dass der Lagerschild 5 einer Positionierung und Halterung der Motoranordnung dient.

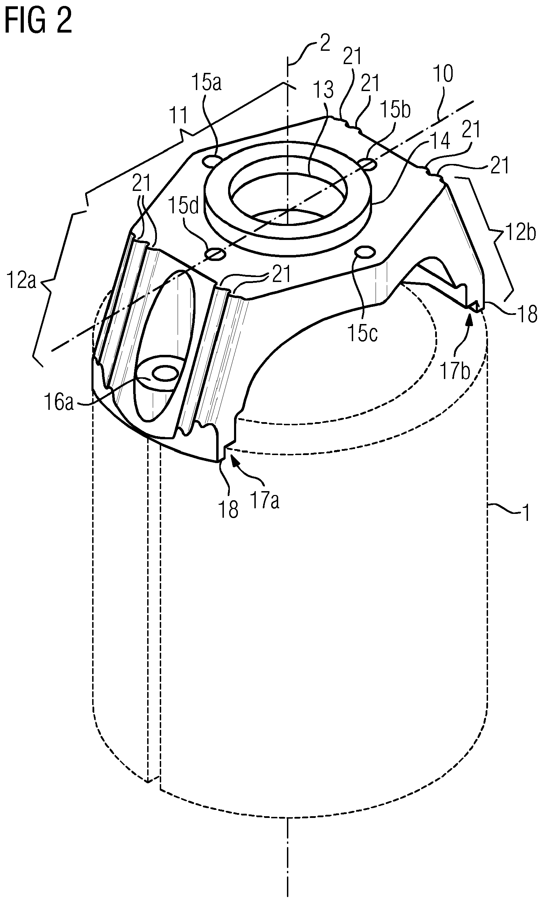

Nähere Ausführungen zur Ausgestaltung des Lagerschildes 5 werden im Folgenden anhand der Figuren 2, 3 und 4 vorgenommen. Die Figur 2 zeigt eine perspektivische Ansicht des Lagerschildes 5, welcher auf einem Stator 1 aufsitzt. Der Lagerschild 5 weist eine Bügelform auf, wobei eine Bügelachse 10 im Wesentlichen radial zur Längsachse 2 ausgerichtet ist. Der Lagerschild 5 weist einen zentralen Lagerbereich 11 auf, welcher eine im Wesentlichen sechseckige Kontur (Grundfläche) aufweist. An parallel zueinander ausgerichteten und entgegengesetzt liegenden Seiten des zentralen Lagerbereichs 11 sind Bügelenden 12a, 12b angeordnet. Der Lagerschild 5 ist über die Bügelenden 12a, 12b am Stator 1 abgestützt. Der zentrale Lagerbereich 11 weist dabei eine im Wesentlichen ebene Anlagefläche auf. Die Bügelenden 12a, 12b spreizen von dem zentralen Lagerbereich 11, insbesondere von der ebenen Anlagefläche ab, so dass der Lagerschild 5 sich über einer Stirnseite des Stators 1 brückenartig erstreckt.

Zentrisch im zentralen Lagerbereich 11 ist eine Lageröffnung 13 angeordnet. Die Lageröffnung 13 ist von einer Schulter 14 begrenzt, so dass beispielsweise ein Wälzlager in die Lageröffnung 13 aus Richtung der Innenkrümmung des Lagerschildes 5 in die Lageröffnung 13 einsetzbar ist, wobei über die Schulter 14 ein vollständiges Hindurchtauchen des Wälzlagers verhindert ist. Die Schulter 14 bildet so einen Anschlag in Richtung der Längsachse 2 für ein Lager der Welle 4. Im zentralen Lagerbereich 11 sind weiterhin symmetrisch um die Lageröffnung 13 Anschlagpunkte 15a, 15b, 15c, 15d angeordnet. Anschlagpunkte 15a, 15b, 15c, 15d bilden Eckpunkte eines Viereckes, wobei vorliegend die Eckpunkte eines Rhombus definiert sind. An den Anschlagpunkten 15a, 15b, 15c, 15d ist ein Verbolzung ermöglicht, um den Lagerschild 5 und damit die Motoranordnung, wie in der Figur 1 gezeigt, an einem Traggestell 8 festzulegen. Dabei wird zur Zentrierung die Schulter 14 genutzt, welche korrespondierend in eine Ausnehmung 9 eines Traggestelles 8 hineinragen kann, wobei mittels Bolzen beispielsweise ein Verschrauben oder Vernieten usw. des Lagerschildes 5 mit dem Traggestell 8 vorgenommen werden kann. Entsprechend können Kräfte aus dem Stator 1 über die Bügelenden 12a, 12b in den zentralen Lagerbereich 11 geleitet und von dort in das Traggestell 8 übertragen werden.

Zwischen den parallel ausgerichteten Seiten des zentralen Lagerbereiches 11, von welchen sich die Bügelenden 12a, 12b abspreizen, ist der zentrale Anlagebereich 11 konvex auskragend ausgebildet, so dass um den Bereich der Lageröffnung 13 eine Verbreiterung des Lagerschildes 5 quer zur Bügelachse 10 erfolgt. Entsprechend ist der Lagerbereich 11 quer zur Bügelachse 10 konvex auskragend ausgeformt. Vorliegend ist eine Auskragung in Form eines stumpfen Winkels vorgesehen, so dass im Zusammenspiel mit den parallelen Seiten, an welchen die Bügelenden 12a, 12b angesetzt sind, ein im Wesentlichen sechseckiger zentraler Lagerbereich 11 gebildet ist. Dabei ist vorgesehen, dass im Bereich der stumpfwinkligen Auskragung im Bereich einer Winkelhalbierenden jeweils ein Anschlagpunkt 15a, 15c angeordnet ist. In Richtung des Verlaufes der Bügelachse 10 ist mittig gegenüber den Seiten des zentralen Lagerbereiches 11, an welchen sich die Bügelenden 12a, 12b anschließen, eine Positionierung von Anschlagpunkten 15b, 15d vorgesehen. Fluchtend zu diesem Ausnehmungen der Anschlagpunkte 15b, 15d ist in den Bügelenden 12a, 12b jeweils ein Verspannpunkt 16a, 16b angeordnet, um einen Spannanker 7 aufzunehmen (vgl. Figur 1). Die als Verspannpunkte 16a, 16b dienenden Ausnehmungen durchsetzen die Bügelenden 12a, 12b und münden in Anlageflächen 17a, 17b, welche einem stirnseitigen Aufsitzen des Lagerschildes 5 auf dem Stator 1 dienen. Zum Begrenzen der Anlageflächen 17a, 17b ist außenmantelseitig eine zentrierende Schulter 18 jeweils an den Anlageflächen 17a, 17b angeordnet. Die zentrierenden Schultern 18 sind jeweils Abschnitte eines Kreisringes, welche derart beabstandet sind, dass ein formkomplementäres Aufsitzen des Lagerschildes 5 auf einer Stirnseite des Stators 1 ermöglicht ist, wobei die Anlageflächen 17a, 17b am Stator 1 stirnseitig anliegen und die Schultern 18 auf Grund ihrer komplementär zur Krümmung der Mantelfläche des Stators 1 ausgebildeten Krümmung ein Zentrieren des Lagerschildes 5 stirnseitig am Stator 1 ermöglichen.

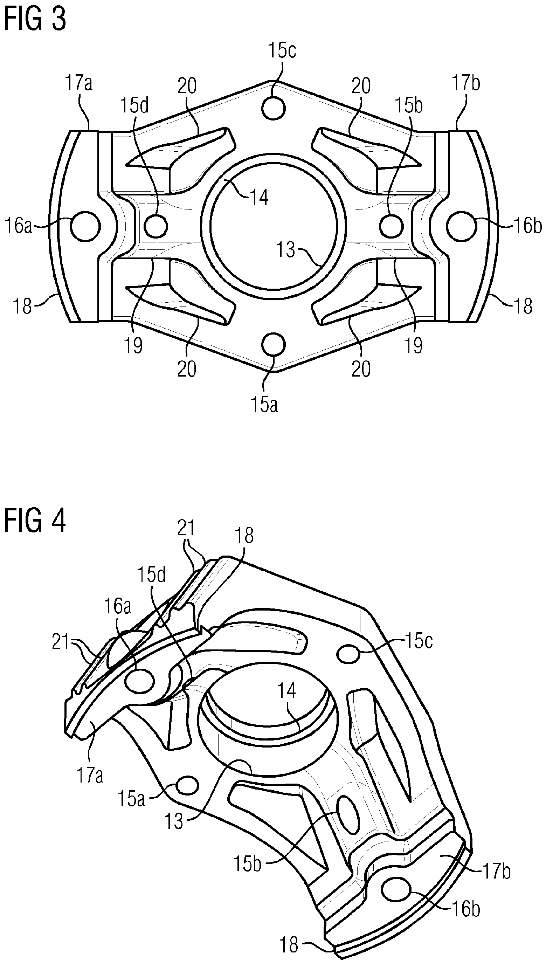

Die Bügelenden 12a, 12b sind zusätzlich auf ihrer Außenkrümmung mit mehreren Rippen 21 versehen. Die Rippen 21 sind dabei im Wesentlichen parallel zueinander ausgerichtet, wobei die Rippen 21 einen linearen Verlauf aufweisen, welcher im Wesentlichen parallel zur Bügelachse 10 ausgerichtet ist. Die Rippen 21 versteifen beiderseits der Verspannpunkte 16a, 16b (vgl. Figur 4, Figur 2) die Bügelenden 12a, 12b. Anhand der Figur 2 ist weiterhin erkennbar, dass sich die Verspannpunkte 16a, 16b in die auf der Bügelinnenseite (Innenkrümmung) angeordneten mittigen Stege 19 hinein erstrecken. Trotz einer Einsenkung der Verspannpunkte 16a, 16b in den Bügelenden 12a, 12b kann durch die mittigen Stege 19 eine Stabilisierung des Lagerschildes 5 erfolgen.

Die Figur 3 zeigt eine Draufsicht auf die Anlageflächen 17a, 17b des Lagerschildes 5. Zur Verstärkung des zentralen Lagerbereiches 11 ist auf der Bügelinnenseite (Innenkrümmung) des Lagerschildes 5 eine Verstärkung der Wandung vorgesehen. Dazu ist in jeden der Beiden Bügelenden 12a, 12b mittig jeweils ein Steg 19 angeordnet, welcher von der Lageröffnung 13 bis in das jeweilige Bügelende 12a, 12b hinein verläuft. Die Stege 19 sind dabei jeweils von einer Öffnung eines Anschlagpunktes 15b, 15d durchsetzt. Weiterhin sind die Stege 19 auch jeweils von den Ausnehmungen der Verspannpunkte 16a, 16b durchsetzt. Somit bildet ein Steg 19 jeweils eine Bahn, mittels welcher ausgehend vom jeweiligen Verspannpunkt 16a, 16b bis zu der Lageröffnung 13 eine wandverstärkende Struktur gebildet ist. Die mittigen Stege 19 in den jeweiligen Bügelenden 12a, 12b sind jeweils beiderseits von flankierenden Stegen 20 flankiert. Flankierende Stege 20 sind dabei derart ausgestaltet, dass diese ausgehend von den Ausnehmungen der Anschlagpunkte 15a, 15c, welche in den Winkelhalbierenden der auskragenden stumpfen Winkel des zentralen Lagerbereiches 11 liegen zu jeweils einem der Bügelenden 12a, 12b fortragen. Dabei bilden die flankierenden Stege 20 eine Körperkante des zentralen Lagerbereiches 11. Die flankierenden Stege sind dabei derart angeordnet, dass ausgehend vom zentralen Lagerbereich 11 hin zu den Bügelenden 12a, 12b der jeweilige zentrische Steg 19 flankiert wird, wobei die flankierenden Stege 20 in Richtung der Bügelenden 12a, 12b unter Einschluss des mittigen Steges 19 einander nähernd zu den Bügelenden 12a, 12b zulaufen. Die flankierenden Stege verbinden die in Winkelhalbierenden liegenden Ausnehmungen der Anschlagpunkte 15a, 15c mit den Bügelenden 12a, 12b, wobei die flankierenden Stege 20 an den Bügelenden 12a, 12b anstoßen und diese randseitig versteifen, wohingegen der Steg 19, welcher jeweils zwischen den flankierenden Stegen 20 angeordnet ist, sich stegartig bis in die Bügelenden 12a, 12b hinein erstreckt. Die Lageröffnung 13 ist vollständig von einem wandverstärkenden Umgriff umgeben, von welchem aus die Stege 19, 20 im Wesentlichen in Richtung der Bügelachse 10 zu den Bügelenden 12a, 12b verlaufen und welcher durch die Stege gebildet ist.

Die Figur 4 zeigt eine perspektivische Ansicht des Lagerschildes 5, wobei die Perspektive gegenüber der Figur 2 entgegengesetzt ausgerichtet ist. Zu erkennen ist der Verlauf der flankierenden Stege 20, welche auf der Bügelinnenseite (Innenkrümmung) an die Bügelenden 12a, 12b stoßen und die Außenkanten im Bereich des zentralen Lagerbereiches 11 begrenzen, versteifen und stabilisieren. Weiterhin ist die Lageröffnung 13 mit der vorspringenden Schulter 14 erkennbar.

## Patentansprüche

1. Motoranordnung aufweisend einen Stator (1) und einen Rotor (3) mit einer Welle (4), welche in zumindest einem Lagerschild (5, 6) beweglich gelagert ist, wobei
der Lagerschild (5, 6) bügelförmig verläuft und Bügelenden (12a, 12b) des Lagerschildes (5, 6) sich von einem zentralen Lagerbereich (11) abspreizen und im zentralen Lagerbereich (11) zumindest ein Anschlagpunkt (15a, 15b, 15c, 15d) zum Anschlagen der Motoranordnung angeordnet ist, wobei der Anschlagpunkt (15a, 15b, 15c, 15d) in einem wandungsverstärkten Abschnitt des zentralen Lagerbereiches (11) liegt,
**dadurch gekennzeichnet, dass**
der wandungsverstärkte Abschnitt einen Steg (19, 20) zu einem Bügelende (12a, 12b) ausbildet und der Steg (19, 20) ein Bügelende (12a, 12b) mit einer Lageröffnung (13) für die Welle (4) verbindet, wobei ausgehend von der Lageröffnung (13) mehrere Stege (19, 20) in Richtung des Bügelendes (12a, 12b) verlaufen, wobei ein mittiger Steg (19) beiderseits von jeweils einem Steg (20) flankiert ist, die einander annähernd auf das Bügelende (12a, 12b) zulaufen und der mittige Steg (19) sich bis in das Bügelende (12a, 12b) erstreckt und in dem mittigen Steg (19) ein Verspannpunkt (16a, 16b) für den Stator (1) angeordnet ist, wobei die flankierenden Stege (20) an das Bügelende (12a, 12b) anstoßend enden.

2. Motoranordnung nach Anspruch 1,
**dadurch gekennzeichnet, dass**
der zentrale Lagerbereich (11) zwischen den Bügelenden (12a, 12b) eine in Querrichtung verlaufende Auskragung aufweist.

3. Motoranordnung nach Anspruch 1 oder 2,
**dadurch gekennzeichnet, dass**
der zentrale Lagerbereich (11) zwischen den Bügelenden (12a, 12b) im Wesentlichen konvex auskragt.

4. Motoranordnung nach Anspruch 1 bis Anspruch 3,
**dadurch gekennzeichnet, dass**
der zentrale Lagerbereich (11), eine im Wesentlichen sechseckige Grundfläche aufweist.

5. Motoranordnung nach Anspruch 1 bis Anspruch 4,
**dadurch gekennzeichnet, dass**
der Lagerschild (5, 6) gegen den Stator (1) verspannt, insbesondere unter Zwischenlage des Stators (1) mit einem gegenseitigen Lagerschild (5, 6) verspannt ist.

6. Motoranordnung nach Anspruch 5,
**dadurch gekennzeichnet, dass**
ein Lager in der Lageröffnung (13) durch Verspannen des Lagerschildes (5, 6) gegen den Stator (11) axial gesichert ist.

7. Motoranordnung nach einem der Ansprüche 1 bis 6,
**dadurch gekennzeichnet, dass**
ein wandungsverstärkender Steg (19, 20) eine Körperkante des zentralen Lagerbereiches (11) bildet.

8. Motoranordnung nach Anspruch 1 bis Anspruch 7,
**dadurch gekennzeichnet, dass**
zumindest ein Bügelende (12a, 12b) eine oberflächenvergrößernde Verrippung (21) trägt.

9. Motoranordnung nach Anspruch 1 bis Anspruch 8,
**dadurch gekennzeichnet, dass**
zumindest eines der Bügelenden (12a, 12b) eine Anlagefläche (17a, 17b) für den Stator (1) aufweist, an/in welcher eine zentrierende Schulter (18) für den Stator (11) angeordnet ist.

10. Antriebseinrichtung, insbesondere für ein Schaltgerät, aufweisend eine Speicherfeder,
**dadurch gekennzeichnet, dass**
eine Motoranordnung nach einem der Ansprüche 1 bis 9 einem Spannen der Speicherfeder dient.

## Claims

1. Motor arrangement comprising a stator (1) and a rotor (3) having a shaft (4) which is movably mounted in at least one bearing shield (5, 6), wherein the bearing shield (5, 6) extends in the form of a bow and bow ends (12a, 12b) of the bearing shield (5, 6) spread out from a central bearing region (11), and at least one attachment point (15a, 15b, 15c, 15d) for attachment in the motor assembly is arranged in the central bearing region (11), wherein the attachment point (15a, 15b, 15c, 15d) is situated in a wall-reinforced portion of the central bearing region (11),
**characterized in that**
the wall-reinforced portion forms a web (19, 20) towards a bow end (12a, 12b), and the web (19, 20) connects a bow end (12a, 12b) to a bearing opening (13) for the shaft (4), wherein, starting from the bearing opening (13), a plurality of webs (19, 20) extend in the direction of the bow end (12a, 12b), wherein a central web (19) is flanked on both sides by respective webs (20) which run towards the bow end (12a, 12b) while approaching one another, and the central web (19) extends into the bow end (12a, 2b), and a bracing point (16a, 16b) for the stator (1) is arranged in the central web (19), wherein the flanking webs (20) end butting against the bow end (12a, 12b).

2. Motor assembly according to Claim 1,
**characterized in that**
the central bearing region (11) has, between the bow ends (12a, 12b), a projection which extends in the transverse direction.

3. Motor assembly according to Claim 1 or 2,
**characterized in that**
the central bearing region (11) projects substantially convexly between the bow ends (12a, 12b).

4. Motor assembly according to Claim 1 to Claim 3,
**characterized in that**
the central bearing region (11) has a substantially hexagonal base surface.

5. Motor assembly according to Claim 1 to Claim 4,
**characterized in that**
the bearing shield (5, 6) is braced against the stator (1), in particular is braced with an opposite bearing shield (5, 6) with the interposition of the stator (1).

6. Motor assembly according to Claim 5,
**characterized in that**
a bearing is axially secured in the bearing opening (13) by bracing the bearing shield (5, 6) against the stator (11).

7. Motor assembly according to one of Claims 1 to 6,
**characterized in that**
a wall-reinforcing web (19, 20) forms a body edge of the central bearing region (11).

8. Motor assembly according to Claim 1 to Claim 7,
**characterized in that**
at least one bow end (12a, 12b) bears surface-increasing ribbing (21).

9. Motor assembly according to Claim 1 to Claim 8,
**characterized in that**
at least one of the bow ends (12a, 12b) has a bearing surface (17a, 17b) for the stator (1), on/in which bearing surface there is arranged a centring shoulder (13) for the stator (11).

10. Drive device, in particular for a switching device, having an accumulator spring,
**characterized in that**
a motor assembly according to one of Claims 1 to 9 serves for tensioning the accumulator spring.

## Revendications

1. Agencement d'un moteur comportant un stator (1) et un rotor (3) avec un arbre (4), qui est monté mobile dans au moins un flasque (5, 6), dans lequel
le flasque (5, 6) s'étend en forme d'étrier et des extrémités (12a, 12b) d'étrier du flasque (5, 6) s'écartent d'une partie (11) centrale de palier et dans la partie (11) centrale de palier est disposé un point (15a, 15b, 15c, 15d) de butée, pour la venue en butée de l'agencement de moteur, dans lequel le point (15a, 15b, 15c, 15d) de butée se trouve dans un segment à paroi renforcée de la partie (11) centrale de palier,
**caractérisé en ce que**
le segment à paroi renforcée constitue une entretoise (19, 20) allant vers une extrémité (12a, 12b) de l'étrier et l'entretoise (19, 20) relie une extrémité (12a, 12b) de l'étrier à une ouverture (13) de palier pour l'arbre (4), dans lequel, à partir de l'ouverture (13) de palier, plusieurs entretoises (19, 20) s'étendent en direction de l'extrémité (12a, 12b) de l'étrier, dans lequel une entretoise (19) médiane est flanquée des deux côtés de respectivement une entretoise (20), qui vont l'une et l'autre à peu près à l'extrémité (12a, 12b) de l'étier, et l'entretoise (19) médiane s'étend jusqu'à l'extrémité (12a, 12b) de l'étrier et dans l'entretoise (19) médiane est disposé un point (16a, 16b) de blocage du stator (1), dans lequel les entretoises (20) de flanc se terminent en appui sur l'extrémité (12a, 12b) de l'étrier.

2. Agencement de moteur suivant la revendication 1,
**caractérisé en ce que**
la partie (11) centrale de palier a, entre les extrémités (12a, 12b) de l'étrier, une partie en saillie s'étendant dans la direction transversale.

3. Agencement de moteur suivant la revendication 1 ou 2,
**caractérisé en ce que**
la partie (11) centrale de palier est en saillie, d'une manière sensiblement convexe, entre les extrémités (12a, 12b) de l'étrier.

4. Agencement de moteur suivant la revendication 1 à la revendication 3,
**caractérisé en ce que**
la partie (11) centrale de palier a une surface de base sensiblement hexagonale.

5. Agencement de moteur suivant la revendication 1 à la revendication 4,
**caractérisé en ce que**
le flasque (5, 6) est serré contre le stator (1), en étant notamment serré, avec interposition du stator (1), par un flasque (5, 6) mutuel.

6. Agencement de moteur suivant la revendication 5,
**caractérisé en ce qu'**
un palier est bloqué axialement dans l'ouverture (13) de palier par serrage du flasque (5, 6) contre le stator (11).

7. Agencement de moteur suivant l'une des revendications 1 à 6,
**caractérisé en ce qu'**
une entretoise (19, 20) à paroi renforcée forme une arête de corps de la partie (11) centrale de palier.

8. Agencement de moteur suivant la revendication 1 à la revendication 7,
**caractérisé en ce qu'**
au moins une extrémité (12a, 12b) de l'étrier porte un nervurage (21) d'agrandissement de la surface.

9. Agencement de moteur suivant la revendication 1 à la revendication 8,
**caractérisé en ce qu'**
au moins l'une des extrémités (12a, 12b) de l'étrier a une surface (17a, 17b) d'application du stator (1), sur/dans laquelle est disposé un épaulement (18) de centrage du stator (11).

10. Dispositif d'entraînement, notamment d'un appareil de coupure, comportant un ressort accumulateur,
**caractérisé en ce qu'**
un agencement de moteur suivant l'une des revendications 1 à 9 sert à bander le ressort accumulateur.
